# EUROPEAN PATENT APPLICATION

(11) **EP 3 709 604 A1**
(43) Date of publication of application: **16.09.2020**
(21) Application number: 19162751.2
(22) Date of filing: 14.03.2019
(51) Int. Cl.: H04L 29/08, G05B 19/418

(54) **METHOD FOR CREATING AN ASSET DATA MODEL TO CONTROL AN IOT-DEVICE BY A CONTROL MESSAGE**

(71) Applicant: Siemens Aktiengesellschaft, 80333 München (DE)
(72) Inventor: Aksoy, Banu Humeyra, 34870 Istanbul (TR); Demirci, Senem, 34860 Istanbul (TR)
(74) Representative: Maier, Daniel Oliver

(57) **Abstract**

A method (100) for automatic creating an asset data model comprising following steps:
a. receiving (110) an initial message from an input containing meta data and message data, wherein the meta data comprise structure definition data, structure field data and field meta data,
b. creating (120) an aspect type with aspect type data and an asset type with aspect type data from the meta data and creating the asset data model automatically from the aspect type and the asset type, wherein the aspect type data are determined at least from the meta data, structure definition data, structure field data and field meta data, and the asset type data are determined at least from the aspect type data,
c. generating (130) the control message, comprising the asset data model,
d. publishing (140) the control message based on publish-subscribe software architecture to the IoT-device.

## Description

The invention relates to a method for automatic creating an asset data model for use in a publish-subscribe software architecture to control an IoT-device by a control message.

The invention relates further to a platform for automatic creating an asset data model for use in a publish-subscribe software architecture, and for automatic publishing messages based on the asset data model.

The invention relates further to a system comprising the platform and an IoT-device.

Digitally transforming assets is a priority for manufacturers in the age of Industry 4.0, i.e. Internet-of-Things (IoT). Computers and automation technology have come together to create game-changing possibilities and the global marketplace has been turned completely on its head. To compete globally, manufacturers are looking to connect factory machines to the cloud and become more flexible in their production to meet customer expectations. However, they're resistant to making changes to their machines because doing so seems too risky, expensive, insecure, and intrusive, especially given the wide variety of devices on the plant floor.

Recent technological developments, however, address these barriers to smart factory transformation, helping companies get connected to the cloud to manage data and devices, gain insights, and leverage machine learning capabilities. The backbone of this connectivity is the Open Platform Communications Unified Architecture (OPC UA), which simplifies interoperability and enables manufacturers to get a head start on transforming their assets into smart factories.

OPC UA is a standard that ensures the open connectivity, interoperability, security, and reliability of industrial automation devices and systems. OPC UA is widely recognized as the key communication and data modeling technology for the Industry 4.0 initiative. It works with many software platforms, is completely scalable, and has been widely adopted across several industries because of its flexibility.

However, the introduction of OPC UA into smart factories does not lead to solve individual process steps, which are often still manually. Today, IoT platforms comprise often data models, which are designed to store known data structures. However, before data being stored, they need to be modelled first. But this procedure is not suitable for OPC UA PubSub data uploading approach. According to OPC UA, PubSub devices, which are sending OPC UA PubSub data first, must define and send meta data and model data.

In software architecture, publish-subscribe (PubSub) is a messaging pattern where senders of messages, called publishers, do not program the messages to be sent directly to specific receivers, called subscribers, but instead categorize published messages into classes without knowledge of which subscribers, if any, there may be. Similarly, subscriber express interest in one or more classes and only receive messages that are of interest, without knowledge of which publishers, if any, there are.

Publish-subscribe is a sibling of the message queue paradigm and is typically one part of a larger message-oriented middleware system. Most messaging systems support both the pub/sub and message queue models in their API, e.g. Java Message Service (JMS).

This pattern provides greater network scalability and a more dynamic network topology, with a resulting decreased flexibility to modify the publisher and the structure of the published data.

In the publish-subscribe model, subscribers typically receive only a subset of the total messages published. The process of selecting messages for reception and processing is called filtering. There are two common forms of filtering: topic-based and content-based.

In a topic-based system, messages are published to "topics" or named logical channels. Subscribers in a topic-based system will receive all messages published to the topics to which they subscribe, and all subscribers to a topic will receive the same messages. The publisher is responsible for defining the classes of messages to which subscribers can subscribe.

In a content-based system, messages are only delivered to a subscriber if the attributes or content of those messages matches constraints defined by the subscriber. The subscriber is responsible for classifying the messages.

Some systems support a hybrid of the two; publishers post messages to a topic while subscribers register content-based subscriptions to one or more topics.

In prior art, IoT platform data modeling needs to be done manually, and before the IoT devices can start to operate, data need to be mapped manually to a data model, which is needed to control the IoT device. However, manual editing of complex data structures needs skilled persons, is time consuming and error-prone. Thus, manual modelling is expensive and undesirable.

Thus, it is the objective of the invention to improve further the automatization of smart factories using OPC UA, like the Siemens MindSphere® IoT platform, and to automate manual tasks in prior art in order to eliminate complex manual operations, which can cause errors and prolong the overall production time, in order to reduce cost and production time and further, to increase data integrity and reliability.

The objective of the invention is obtained by a method for automatic creating an asset data model for use in a publish-subscribe software architecture to control an IoT-device by a control message, comprising following steps:
a. receiving an initial message from an input containing meta data and message data, wherein the meta data comprise structure definition data, structure field data and field meta data,
b. creating an aspect type with aspect type data and an asset type with aspect type data from the meta data and creating the asset data model automatically from the aspect type and the asset type, wherein the aspect type data are determined at least from the meta data, structure definition data, structure field data and field meta data, and the asset type data are determined at least from the aspect type data,
c. generating the control message, comprising the asset data model,
d. publishing the control message based on publish-subscribe software architecture to the IoT-device.

An asset is a digital representation of a machine or of an automation system with one or more automation devices connected to the Siemens MindSphere® platform (e.g. PLC). Data collection and data delivery with MindSphere relies on so-called (virtual) assets. An asset can be any element, e.g. as a pump, a motor, a PLC, a complete machine tool, a production line, a robot, a crane, a vehicle, a wind turbine, etc., just to name a few examples. The data describing an asset is collected and transmitted to MindSphere. These data are then made available for further processing and evaluation.

Aspects are a data modeling mechanism for assets. Aspects group related data points based on their logical association. Example: The pump set has an aspect, z. For example, "Energy Consumption", which contains the data points "Power," "Power," "Voltage," and so on. The aspect should have a connection to data points and a physical asset. An aspect can comprise several variables

A type is a preconfigured template for an asset. Assets assume the properties of the type on which they are based. Within the Type you can define which Aspects are integrated into the template.

Consequently, aspect types and asset types are templates for aspects and assets.

Thus, the objective of the invention is being achieved by an automating step of modeling specific data, which are needed for subsequent manufacturing steps, considering OPC UA PubSub prerequisites. By the automatization in the generation of the model, the efficiency of the programming and the operation at all is improved. Moreover, the data integrity is improved since manual operation in prior art frequently incorporates errors in the used data model.

Thus, the method enables to control a system of IoT-devices automatically in a very efficient and reliable way.

The objective of the invention is obtained also by a platform for automatic creating an asset data model for use in a publish-subscribe software architecture, and for automatic generating and publishing messages based on the asset data model, comprising means configured to carry out the aforesaid method according to the invention.

The objective of the invention is obtained also by a system comprising the platform according the preceding claim and one or even a plurality of IoT-devices, wherein the messenger is configured to control the IoT-device by the published message.

The invention is not restricted to the specific embodiments described in detail herein, but encompasses all variants, combinations and modifications thereof that fall within the framework of the appended claims.

The invention will be explained in more detail with reference to an exemplary embodiment shown in the accompanying drawings. The figures show in
- Fig. 1: an embodiment of the method of the invention,
- Fig. 2: an example of created assets and aspect types,
- Fig. 3: an example of used meta data,
- Fig. 4: an example of a Domain Model of Asset-Aspect Types and Instances,
- Fig. 5: an embodiment of Aspect Type for SPSFields,
- Fig. 6: a flowchart with an example of automatic creation of Asset-Aspect Types,
- Fig. 7: a system arrangement of an embodiment according to the invention.

It is clear, that further not shown parts are necessary for the operation of the platform or system, e.g. means for communication, IO, storage or processing. For the sake of better understanding these parts are not illustrated and described.

The method according to the invention can be executed as a computer program on a computer platform or system, wherein the platform or system can be a local or a distributed equipment.

Moreover, it is clear, that more than one IoT device, i.e. a plurality of IoT devices, can be controlled by the method, the platform and the system according to the invention.

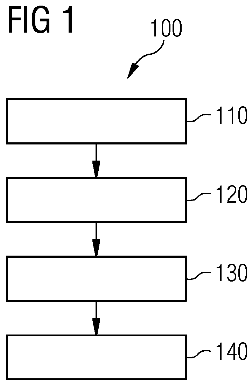

**Fig. 1** shows an embodiment of the method according to the invention. The method 100 for automatic creating of an asset data model for use in a publish-subscribe software architecture to control an IoT-device by a control message, comprises following steps:
a. receiving 110 an initial message from an input containing meta data and message data, wherein the meta data comprise structure definition data, structure field data and field meta data,
b. creating 120 an aspect type with aspect type data and an asset type with aspect type data from the meta data and creating the asset data model automatically from the aspect type and the asset type, wherein the aspect type data are determined at least from the meta data, structure definition data, structure field data and field meta data, and the asset type data are determined at least from the aspect type data,
c. generating 130 the control message, comprising the asset data model,
d. publishing 140 the control message based on publish-subscribe software architecture to the IoT-device.

The asset data model is automatically created by data mapping.

The meta data comprise structure definition data, structure field data and field meta data.

The aspect type data are determined at least from the meta data.

The asset type data are determined at least from the aspect type data.

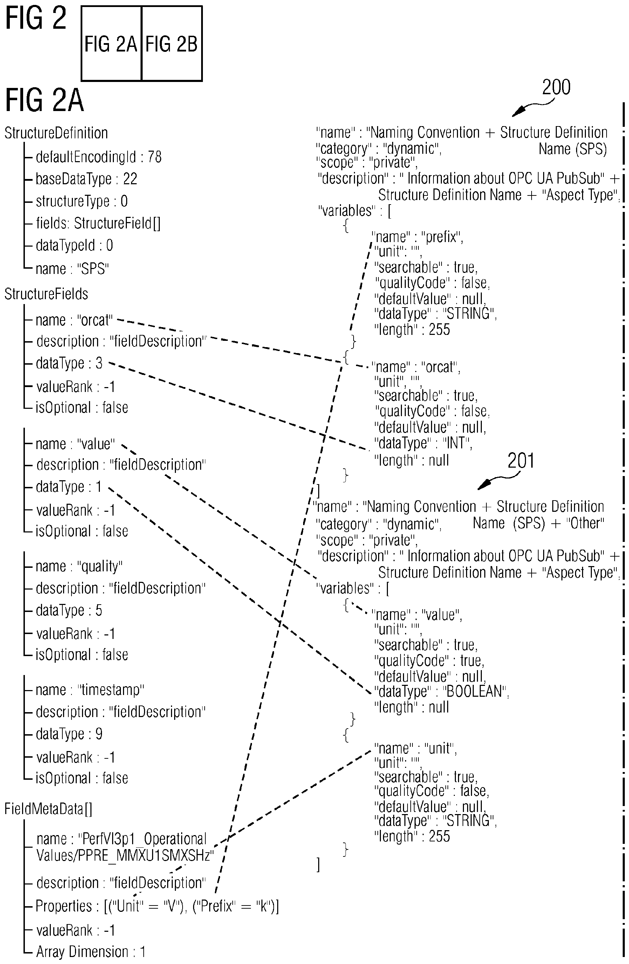

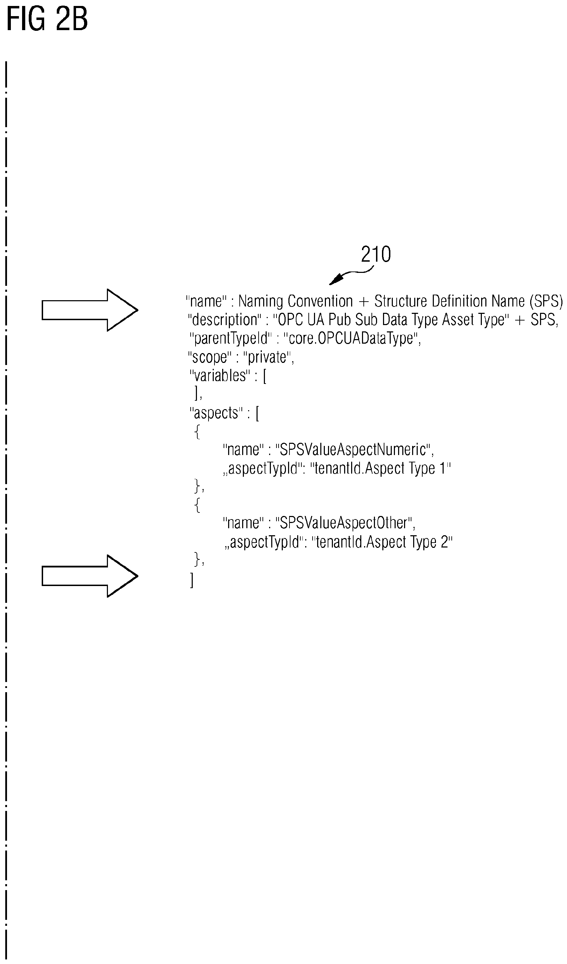

**Fig. 2** depicts an example of data structures used for the invention. For instance, metadata can contain:
- DataTypeSchemaHeader: array of definition of structuredDataType
- FieldMetadata: array of structuredDataType instances

An asset is a digital representation of a machine or of an automation system with one or more automation devices connected to the Siemens MindSphere® platform (e.g. PLC). Data collection and data delivery with MindSphere relies on so-called (virtual) assets. An asset can be any element, e.g. as a pump, a motor, a PLC, a complete machine tool, a production line, a robot, a crane, a vehicle, a wind turbine, etc., just to name a few examples. The data describing an asset is collected and transmitted to MindSphere. These data are then made available for further processing and evaluation.

Aspects are data modeling mechanisms for assets. Aspects group related data points based on their logical association. Example: The pump set has an aspect, for example, "Energy Consumption", which contains the data points "Power", "Voltage" and so on. The aspect should have a connection to data points and a physical asset. An aspect can comprise several variables

A Type is a preconfigured template for an asset. Assets assume the properties of the type on which they are based. Within the Type you can define which Aspects are integrated into the template.

AspectType 311 and AssetType 301 are templates for Aspects and Assets, i.e. templates for a predefined structure.

Thus, AspectType 200, 201 are mapped to a DataPointAssetType 210.

Based on a specific custom object, AssetTypes and AssetInstances are created by using raw values from the definition of structuredDataTypes, for instance according to Fig. 2.

The aspect type 200, 201, 311 and an asset type 301 are used in step b. of the aforesaid method.

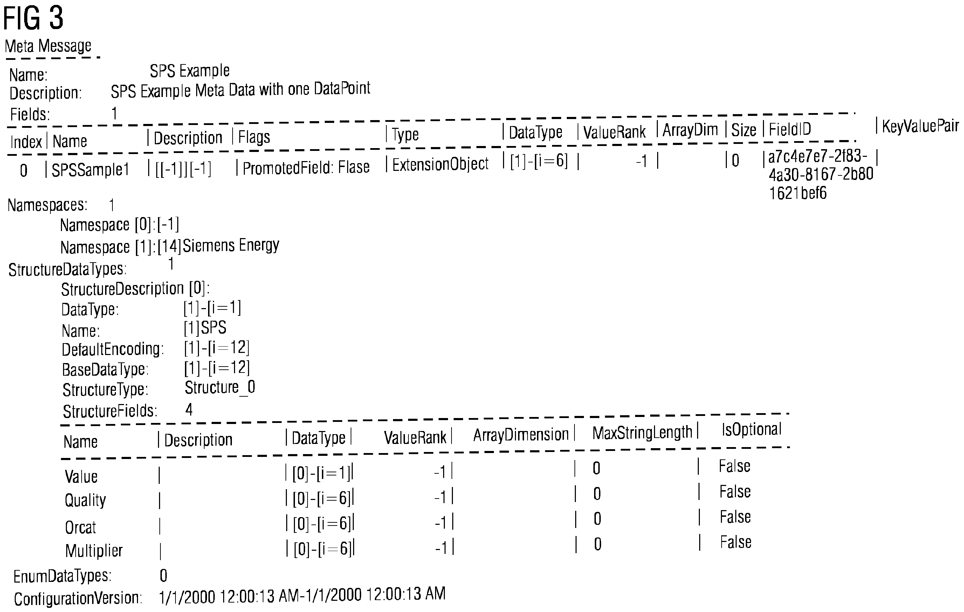

**Fig. 3** shows an example of meta data used at the invention.

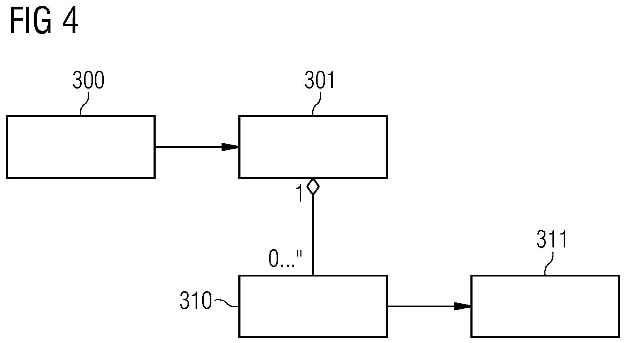

**Fig. 4** shows an example of a domain model of AssetType 301 - AspectType 311 and respective instances. An AssetInstance 300 defines an AssetType 301. One or more elements of AspectInstance 310 define a respective AspectType 311.

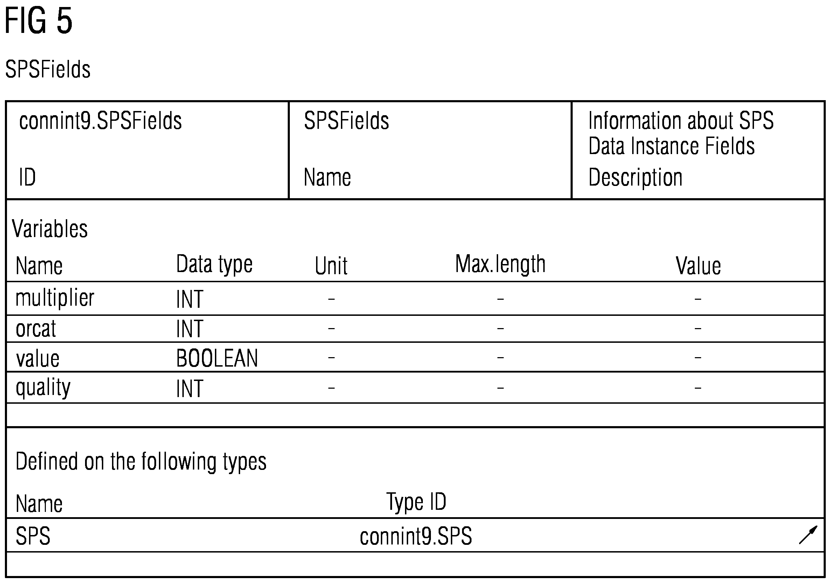

**Fig. 5** shows an embodiment of the AspectType 311 for SPSFields for the given example of MetaData according to Fig. 3.

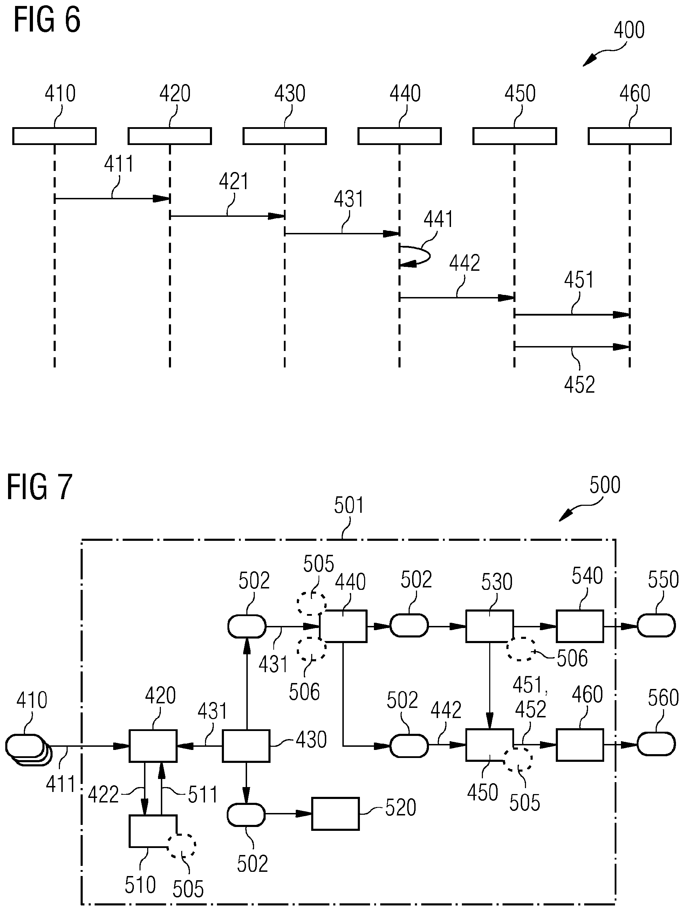

**Fig. 6** illustrates a flowchart 400 with an example of automatic creation of Asset-AspectTypes corresponding to a system arrangement of Fig. 7, which shows as an embodiment according to the invention embedded in an IoT system based on the platform 501 MindSphere® by Siemens. Not all details of the data flow are shown for the sake of better understanding.

The MindSphere® platform 501 for automatic creating an asset data model for use in a publish-subscribe software architecture, and for automatic generating and publishing messages based on the asset data model, comprises means configured to carry out the aforesaid method.

A system according to the invention comprises the aforesaid platform 501 and one or even a plurality of connected IoT-devices. A messenger is configured to control at least one of the plurality of IoT-devices by at least one published message.

A Publisher 410 (acts as a message input) as an MindSphere-input provides messages to a MQTT Broker 420.

The initial message comprises for instance MetaData 411, keys, delta information, status information regarding events or "KeepAlive".

MQTT (Message Queuing Telemetry Transport) is an ISO standard (ISO/IEC PRF 20922) publish-subscribe-based messaging protocol. It works on top of the TCP/IP protocol. It is designed for connections with remote locations where a "small code footprint" is required or the network bandwidth is limited. The publish-subscribe messaging pattern requires a message broker.

The MQTT Broker 420 approves the validity by an Authentication Server 510 via a JWT Validation 422 (JSON Web Token Validation) and returns an "Allow"-Signal 511, if authenticated positively.

In computing, JavaScript Object Notation (JSON) is an open-standard file format that uses human-readable text to transmit data objects consisting of attribute-value pairs and array data types (or any other serializable value). It is a very common data format used for asynchronous browser-server communication.

A JSON Web Token (JWT) is a JSON-based open standard (RFC 7519) for creating access tokens that assert some number of claims. For example, a server could generate a token that has the claim "logged in as admin" and provide that to a client. The client could then use that token to prove that it is logged in as admin. The tokens are signed by one party's private key (usually the server's), so that both parties (the other already being, by some suitable and trustworthy means, in possession of the corresponding public key) are being able to verify that the token is legitimate. The tokens are designed to be compact, safe and usable especially in a web-browser single-sign-on (SSO) context. JWT claims can be typically used to pass identity of authenticated users between an identity provider and a service provider, or any other type of claims as required by business processes.

JWT relies on other JSON-based standards: JWS (JSON Web Signature) RFC 7515 and JWE (JSON Web Encryption) RFC 7516.

The Authentication Server 510 can be implemented as a Redis (Remote Dictionary Server), which is an open source in-memory data structure project implementing a distributed, in-memory key-value database with optional durability. Redis supports different kinds of abstract data structures, such as strings, lists, maps, sets, sorted sets, hyperloglogs, bitmaps, streams and spatial indexes.

A Subscriber 430 fetches 431 the validated messaged 421 in form of encoded MetaData and forwards them via SQS 502 to an UADP Parser 440 (Unified Access Data Plane Parser), and/or the further parsers, e.g. a JSON Parser 520 (JavaScript Object Notation Parser), which is connected via SQS 502 to the Subscriber 430 in order to enhance the instruction set of the Mindsphere platform 501. A binary data format can be used for a simple parser as well.

Amazon Simple Queue Service 502 (SQS) is a fully managed message queuing service that enables you to decouple and scale microservices, distributed systems, and serverless applications. SQS 502 eliminates the complexity and overhead associated with managing and operating message-oriented-middleware and empowers developers to focus on differentiating work. Using SQS 502, you can send, store, and receive messages between software components at any volume, without losing messages or requiring other services to be available.

SQS 502 offers two types of message queues. Standard queues offer maximum throughput, best-effort ordering, and at-least-once delivery. SQS 502 FIFO (first-in first-out) queues are designed to guarantee that messages are processed exactly once, in the exact order that they are sent.

Unified Access Data Plane (UADP) is a standardized technology for fixed and wireless networking.

The UADP Parser 440 is responsible of decoding 441 OPC UA Pub/Sub messages, which can be for instance Discovery messages (contains Metadata). Moreover, the UADP Parser 440 is also responsible of extracting raw values from decoded metadata to build a custom object 442, containing a respective AssetInstance 300 and AssetType 301.

The UADP Parser 440 comprises in this example a Redis 505 as well as a RDS 506 (Relational Database Service).

The UADP Parser 440 generates in this embodiment two data paths, by which data are sent.

In a first path the UADP Parser 440 is connected to an IoT Writer 530 via SQS 502 and comprises timeseries data 540, which are dynamic data, e.g. a data set with a value at a certain point of time and the time stamp from that point of time. In this example the IoT Writer 530 has an implemented RDS 506. The IoT Writer 530 checks the created asset instances and stores the timeseries data 540 under the specific asset instance.

In a second path the UADP Parser 440 is connected to an AssetWriter 450 via SQS 502, which transfers a custom object 442 containing AssetInstance 300 and AssetType 301. In this example the AssetWriter 450 has an implemented Redis 505.

The Redis 505 and the RDS 506 are embodiments for storing data, but other implementations as applicable as well, although the dedicated implementations of Redis 505 and RDS 506 offer performance benefits.

The OPC UA PubSub API (Application Program Interface) comprises several micro services. One of those micro services is the AssetWriter 450, which is responsible for creating the MindSphere ® IoT model and map the OPC UA PubSub data to that model.

The data mapping is performed by step b. of the aforesaid method:
b. creating 120 an aspect type 200, 201, 311 with aspect type data and an asset type 210, 301 with aspect type data from the meta data and creating the asset data model automatically from the aspect type 200, 201, 311 and the asset type 210, 301, wherein the aspect type data are determined at least from the meta data, structure definition data, structure field data and field meta data, and the asset type data are determined at least from the aspect type data,

The AssetWriter 450 creates the AspectType for a "fields" field in the StructureDefinition, which contains all defined fields in StructureFields. Subsequently the AssetWriter 450 creates 451 the AssetType 210, 301 containing the AspectType 200, 201, 311. Acordingly, the AssetWriter 450 creates 452 the AssetInstance 300. Both creation steps 451, 452 can be performed by REST (REpresentational State Transfer) and constitute data for a subsequent AssetManagement unit 460, e.g. in form of a Fleet Manager 560, which manages connected IoT devices.

The AssetWriter 450 creates AssetInstance 300 and AssetType 301 using raw values from the definition of structuredDataTypes according to Fig. 2.

The two paths are used for modeling data and to store the timeseries data 540.

The IoT Writer 530 forwards data to the AssetWriter 450 for modeling the timeseries data 540.

The timeseries data 540 constitute data for subsequent control of connected IoT devices, e.g. in form of an Energy Management (EM) application program 550.

After type and instance creation and subsequent mapping, i.e. MetaData is processed, the timeseries data can be uploaded as DataSet messages into the Mindsphere platform at the RDS 506.

The mapping according to Fig. 1 and 2 is performed at the AssetWriter 450.

The IoT Writer 530 is responsible to the handling of the DataSet messages and stores the timeseries data 540 under relevant asset instances at the RDS 505. The AssetWriter 450 is responsible to keep and to store that information at the Redis 505.

Not only Asset and Aspect types are created but also Asset Instances are created. Whenever timeseries data 540 arrive to the MindSphere platform 501, the AssetInstance 300 owning the relevant data is detected and all timeseries data 540 under that specific AssetInstance 300 is stored.

### List of reference numerals:

- 100: Process
- 110: Receiving data
- 120: Creating aspect/ aspect type
- 130: Providing data
- 140: Generating and publishing data, optionally present aspect/ aspect type
- 200, 201, 311: Aspect Type
- 210: Data Point Asset Type
- 300: Asset Instance
- 301: Asset Type
- 310: Aspect Instance
- 400: Flowchart
- 410: Publisher
- 411: MetaData (encoded)
- 420: MQTT Broker (Message Queuing Telemetry Transport Broker)
- 421: MetaData (encoded)
- 422: JWT Validation (JSON Web Token Validation)
- 430: Subscriber
- 431: fetch MetaData (encoded), by SQS
- 440: UADP Parser (Unified Access Data Plane Parser)
- 441: Decode MetaData
- 442: Custom Object containing Asset Types and Instances, by SQS
- 450: AssetWriter
- 451: Create AssetType
- 452: Create Assetlnstance
- 460: AssetManagement
- 500: OPC UA System (Open Platform Communications Unified Architecture System)
- 501: MindSphere IoT Environment
- 502: SQS (Amazon Simple Queue Service)
- 505: Redis (Cache, in-memory data base))
- 506: RDS (Relational Database Service)
- 510: Authentication Server
- 511: Allow
- 520: JSON Parser (JavaScript Object Notation Parser)
- 530: IoT Writer
- 540: IoT TimeSeries
- 550: Energy Management Program "EM App"
- 560: Fleet Manager

## Claims

1. A method (100) for automatic creating an asset data model for use in a publish-subscribe software architecture to control an IoT-device by a control message, comprising following steps:
a. receiving (110) an initial message from an input (410) containing meta data and message data, wherein the meta data comprise structure definition data, structure field data and field meta data,
b. creating (120) an aspect type (200, 201, 311) with aspect type data and an asset type (210, 301) with aspect type data from the meta data and creating the asset data model automatically from the aspect type (200, 201, 311) and the asset type (210, 301), wherein the aspect type data are determined at least from the meta data, structure definition data, structure field data and field meta data, and the asset type data are determined at least from the aspect type data,
c. generating (130) the control message, comprising the asset data model,
d. publishing (140) the control message based on publish-subscribe software architecture to the IoT-device.

2. Platform (501) configured automatically to receive (110), to create (120) an asset data model for use in a publish-subscribe software architecture, and to generate (130) and to publish (140) a control message based on the asset data model, comprising means configured to carry out the method according to the preceding claim.

3. System comprising the platform according the preceding claim and an IoT-device, wherein a control messenger is configured to control the IoT-device by the published control message.
